# EUROPEAN PATENT APPLICATION

(11) **EP 2 530 051 A1**
(43) Date of publication of application: **05.12.2012**
(21) Application number: 11168720.8
(22) Date of filing: 03.06.2011
(51) Int. Cl.: C01B 33/00, C01B 33/025, C04B 35/565, C04B 35/65, F27D 1/16, C22B 5/06

(54) **Reduction furnace body**

(71) Applicant: Evonik Solar Norge AS, 7041 Trondheim (NO)
(72) Inventor: Nygaard, Lars, 7563 MALVIK (NO); Andresen, Birger, 7036 TRONDHEIM (NO); Sörvik, Arvid Inge, 7500 STJÖRDAL (NO)
(74) Representative: Bendele, Tanja

(57) **Abstract**

A reduction furnace body for production of liquid silicon by carbothermic reduction is provided. The body comprises an inner lining. The inner lining comprises: 80-95 % (w/w) of a silicon carbide product containing 1.5 ppm (w/w) or less boron and 3.0 ppm (w/w) or less phosphorus; 5-20 % (w/w) of a silicon product containing 1.5 ppm (w/w) or less boron and 3.0 ppm (w/w) or less phosphorus; and 0.1-5 % (w/w) of a binding agent, such as a resin.

## Description

### Technical field

The present disclosure relates to the field of production of solar grade silicon. In particular, it relates to the inner lining of a reduction furnace body for carrying out a carbothermic reduction of quartz.

### Background

There is a growing demand for solar cell panels, partly due to the concerns about global warming. Accordingly, there is also a growing demand for a cost-efficient and environmentally friendly (i.e. energy-efficient) method for preparing the silicon needed to produce the solar cell panels.

There are several ways of producing silicon. Among these are:

A chemical method involving acid treatment of metallurgical silicon followed by a gas phase reaction with HCI and gas phase decomposition on silicon rods with hydrogen. This chemical method, known as the Siemens Process, consumes high amounts of energy and is thus expensive.

A physical purification method involving refining semi-pure liquid silicon with slag and gas followed by solidification. The solid product is crushed and Fe, Al, Ca and Ti are leached out. The product is then re-melted and subjected to directional solidification. This method is used by the Elkem company.

In a third method, pure quartz is subjected to carbothermic reduction to obtain a silicon liquid, which may be treated by the following steps; gas refining, temperature adjustment, settling, filtering, skimming and directional solidification. A challenge using this method is to produce a silicon product of sufficient purity.

### Summary

The inventors have realized that a method based on a carbothermic reduction of quartz followed by refining in the liquid state is a promising alternative for the production of solar grade silicon. In comparison to the state of the art processes, this method is associated with low investment costs, low operational costs and low energy consumption. Compared to the physical purification method described above, fewer impurities are removed after the carbothermic reduction in this method. Instead, the inventors have chosen to use starting materials of higher purity. The inventors have concluded that it is therefore important that the liquid silicon is not contaminated during the carbothermic reduction. In particular, the inventors have found that if the inner lining of the reduction furnace in which the carbothermic reduction is carried out has a certain composition of components of certain purities, the product of the carbothermic reduction is not contaminated. Thus, a silicon product having the characteristics demanded by the solar cell producers may be obtained after a few relatively uncomplicated and energy-efficient refining steps in the liquid state following the carbothermic reduction.

The inventors have further realized that in such refining steps, it is particularly difficult and thus expensive to remove boron and phosphorus. Thus, it is particularly important that the product of the carbothermic reduction is not contaminated by such elements.

Accordingly, there is provided a reduction furnace body for production of liquid silicon by carbothermic reduction, said body comprising an inner lining, characterized in that inner said lining comprises:
80-95 % (w/w) of a silicon carbide product containing 1.5 ppm (w/w) or less boron and 3.0 ppm (w/w) or less phosphorus;
5-20 % (w/w) of a silicon product containing 1.5 ppm (w/w) or less boron and 3.0 ppm (w/w) or less phosphorus; and
0.1-5 % (w/w) of a binding agent, such as a resin, e.g. a synthetic resin.

Also, there is provided a method for production of a silicon product containing 1.5 ppm (w/w) or less boron and 3.0 ppm (w/w) or less phosphorus by carbothermic reduction, comprising the steps of:
a) adding a quartz product containing 0.50 ppm (w/w) or less boron and 1.0 ppm (w/w) or less phosphorus and a silicon carbide product containing 1.5 ppm (w/w) or less boron and 3.0 ppm (w/w) or less phosphorus; to a reduction furnace having an inner lining; and
b) heating the mixture such that a melt of the silicon product is formed, wherein said lining comprises:
   80-95 % (w/w) of a silicon carbide product having at least the same purity as the silicon carbide product added in step a);
   5-20 % (w/w) of a silicon product having at least the purity of the silicon product produced by the method; and
   0.1-5 % (w/w) of a binding agent, such as a resin.

### Brief description of the figures

Figure 1 shows an embodiment of a whole system for producing solar grade silicon.
Figure 2 shows an embodiment of a reduction furnace body for carrying out a carbothermic reduction of prepared quartz material to silicon.
Figure 3 shows an industrial setting of a reduction furnace body.

### Detailed description

As a first aspect of the present disclosure, there is thus provided a reduction furnace body for production of liquid silicon by carbothermic reduction, said furnace body comprising an inner lining, characterized in that said inner lining comprises:
80-95 % (w/w) of a silicon carbide product containing 1.5 ppm (w/w) or less boron and 3.0 ppm (w/w) or less phosphorus;
5-20 % (w/w) of a silicon product containing 1.5 ppm (w/w) or less boron and 3.0 ppm (w/w) or less phosphorus; and
0.1-5 % (w/w) of a binding agent, such as a resin, e.g. a synthetic phenol formaldehyde resin.

The liquid silicon produced in the reduction furnace may be refined by gas extraction with chlorine gas, which primarily removes aluminum (AI), calcium (Ca) and other elements capable of forming salts or slag with the chlorine gas under the prevailing conditions. Boron (B) and phosphorus (P) are not such elements. The gas extraction may be followed by refinement by directional solidification, during which iron (Fe), Al and other metals having a low distribution coefficient are separated from the solidifying silicon since they have a higher solubility in the melt. However, the distribution coefficients of B and P are relatively high.

To compensate for the inefficient removal of B and P in the refining steps described above, starting materials having low levels of the elements in question are selected. Further, it is important that the levels are not increased during the carbothermic reduction. The inventors have chosen the upper limits of B and P in the components of the inner lining, which is the part of the reduction furnace body that is in contact with the silicon melt, accordingly. Further, the inner lining needs to stand the high temperatures of the carbothermic reduction, and the inventors have chosen the components of the inner lining, and their proportions, accordingly.

Thus, 80-95 % (w/w), preferably 85-95 % (w/w), more preferably 87-93 % (w/w) of the inner lining is constituted by the carbide product. The carbide product contains 1.5 ppm (w/w) or less, preferably 1.0 ppm (w/w) or less, more preferably 0.5 ppm (w/w) or less, most preferably 0.2 ppm (w/w) or less B. Further, the carbide product contains 3.0 ppm (w/w) or less, preferably 2.0 ppm (w/w) or less, more preferably 1.0 ppm (w/w) or less, most preferably 0.5 ppm (w/w) or less, P.

Further, 5-20 % (w/w), preferably 5-15 % (w/w), more preferably 7-13 % (w/w) of the inner lining is constituted by the silicon product. The silicon product contains 1.5 ppm (w/w) or less, preferably 1.0 ppm (w/w) or less, more preferably 0.7 ppm (w/w) or less, most preferably 0.5 ppm (w/w) or less B. Further, the silicon product contains 3.0 ppm (w/w) or less, preferably 2.0 ppm (w/w) or less, more preferably 1.0 ppm (w/w) or less, most preferably 0.5 ppm (w/w) or less P.

According to one embodiment, the silicon carbide product contains 200 ppm (w/w) Al or less. According to an alternative or complementary embodiment, the silicon product contains 300 ppm (w/w) Al or less, such as 200 ppm (w/w) Al or less.

According to another embodiment, the sum of all metal impurities in the silicon carbide product is less than 300 ppm (w/w). According to an alternative or complementary embodiment, the sum of all metal impurities in the silicon product is less than 500 ppm (w/w), such as less than 300 ppm (w/w).

The binding agent is capable of binding the components of the inner lining together. Further, the inner lining composition should be stable at high temperatures, such as temperatures above 2000 °C. Resins are binding agents particularly suitable for such purposes. The resin is preferably a synthetic resin, as such resins may normally be provided with higher purity than natural resins and the resin shall not comprise elements that can contaminate the silicon product to a substantial degree. The resin may for example be a synthetic phenol-formaldehyde resin. One specific example of a synthetic resin that has given satisfactory results is Novolack. Other examples of suitable resins are Resol and Peracit.

However, the inventors realize that other resins may also be used.

According to one embodiment, the thermal conductivity of the inner lining material is at least 15W/m°K at 1500°C.

The inner lining contacts the material (the reactants and the product) in the reduction furnace. However, the reduction furnace body normally comprises further parts to provide for appropriate mechanical, thermal, chemical and/or heat transfer properties.

The reduction furnace body may thus comprise a second lining arranged to contact the outer surface of the inner lining. Thus, in such an embodiment, the inner surface of the second lining is in contact with the outer surface of the inner lining. The inner and the second lining can be regarded as different protective layers. The second lining is normally composed of a heat-resistant material which is different from the inner lining material. An example of such a material is silica ramming paste or silica stone, which may have the same purity as the quartz added as a starting material in the carbothermic reduction.

The energy required for the carbothermic reduction is preferably provided by a power source, such as a DC or an AC power source, connected to at least two electrodes arranged such that an electric arc can heat material provided inside the furnace.

Thus, according to one embodiment, a (first) electrode is arranged to extend into the interior of the furnace from above the furnace. The furnace may for example have an open top, and the (first) electrode may extend through the opening. In an embodiment, more than one, such as two or three (first) electrodes are arranged to extend into the interior of the furnace from above the furnace.

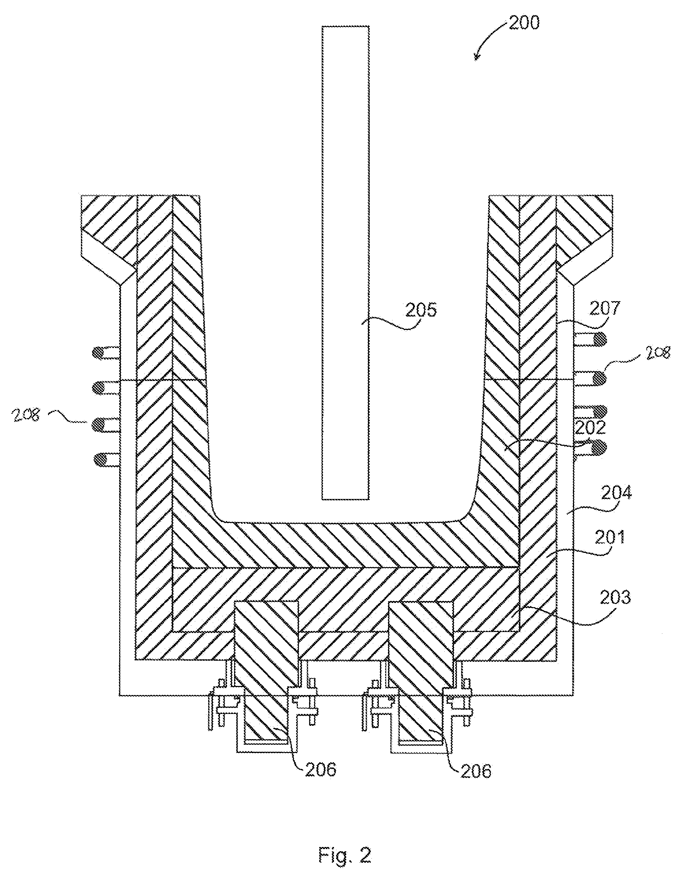

According to a further embodiment, one or more (second) electrode(s) is/are arranged such that it/they extend(s) into the bottom of the furnace from below the furnace. Such (a) (second) electrode(s) do/does not extend into the interior of the furnace where it/they can contact the material provided therein. Rather, its/their one end is embedded in the bottom of the furnace (see e.g. fig 2, 206 and fig 3, 306).

The first and/or the second electrode(s) is/are preferably composed of graphite. High purity graphite that does not contaminate the liquid silicon is available for such applications.

In one embodiment, a layer or a block of graphite or carbon ramming paste is arranged between the inner lining and the second lining in the bottom of the furnace (see e.g. fig 2, 203). Preferably, such layer or block of graphite or carbon ramming paste is in contact with an electrode. For example, the upper end of the second electrode(s) may be embedded in the layer or block of graphite or carbon ramming paste (see e.g. fig 2, 203 and 206). One of the effects of the layer or block of graphite or carbon ramming paste is thus an increase of the surface area of the electrode.

In one embodiment, the reduction furnace body comprises a casing for holding the furnace construction together. The casing may for example be the outermost layer of the furnace construction (see e.g. fig 2, 204). Thus, if the second lining is used, the casing is preferably arranged outside the second lining. The casing may for example be composed of steel, preferably nonmagnetic steel. The furnace may be equipped with a rotating upper part (split body) that may rotate independently from the lower part of the furnace. The split body construction may improve the material transport and gas permeability in the furnace. Furthermore, one or more electric coils may be arranged around the furnace interior to create magnetic fields to rotate the electric arcs inside the furnace. Such a construction will distribute the energy more evenly in the reaction zone.

Further, an insulating layer, such as a web or a fabric may be arranged between the casing and second lining. In addition to providing an insulating effect, such a layer may facilitate movements of the linings relative to the casing. Such movements may for example be the result of temperature changes.

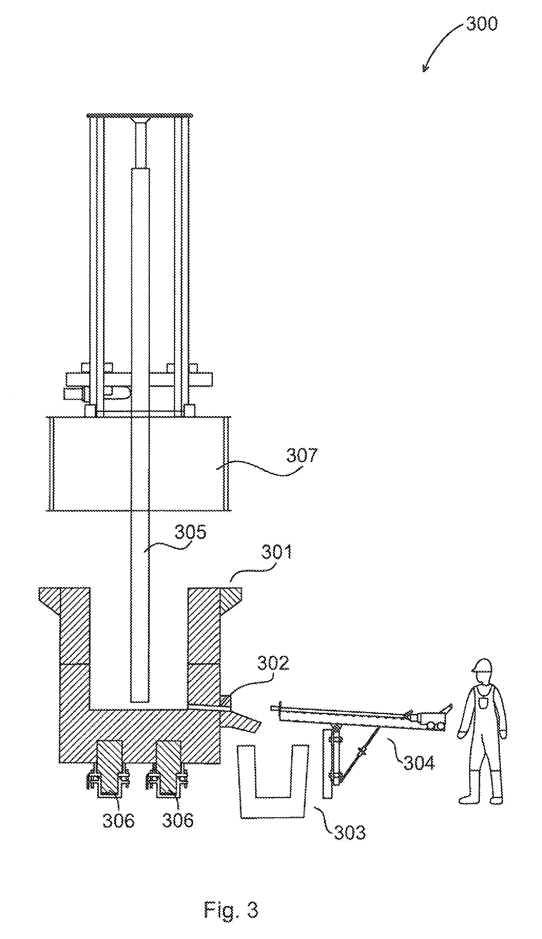

Normally, starting materials are fed to the reduction furnace through its open top. Further, the silicon liquid produced accumulates at the bottom of the reduction furnace. Therefore, a tapping channel/runner is preferably provided at the bottom of the furnace. Through such a channel/runner, the silicon liquid produced is emptied into another compartment, such as a ladle, for further processing (e.g. refining) (see e.g. fig 3, 302). The channel is preferably closable such that the tapping may be controlled.

Such a channel/runner penetrates all layers of the furnace construction. The inner wall(s) of the channel/runner is/are however preferably composed of said inner lining in order to prevent contamination of the silicon liquid flowing through the channel/runner.

The reduction furnace is normally equipped with a forced cooling arrangement. For example, the reduction furnace may be cooled from below, e.g. by air or another cooling media, such as another gas. The inventors have found that a sufficient cooling effect may be obtained if the thermal conductivity through the bottom of the furnace is higher than 9.5 W/°K (the combined value for the thermal conductivity through all layers of the bottom of the furnace).

As a second aspect of the present disclosure, there is provided a method for production of a silicon product containing 1.5 ppm (w/w) or less boron and 3.0 ppm (w/w) or less phosphorus by carbothermic reduction. The method comprises the steps of:
a) adding a quartz product containing 0.5 ppm (w/w) or less boron and 1.0 ppm (w/w) or less phosphorus and a silicon carbide product containing 1.5 ppm (w/w) or less boron and 3.0 ppm (w/w) or less phosphorus to a reduction furnace having an inner lining; and
b) heating the mixture such that a melt of the silicon product is formed, wherein said lining comprises:
   80-95 % (w/w) of a silicon carbide product having at least the purity of the silicon carbide product added in step a);
   5-20 % (w/w) of a silicon product having at least the purity of the silicon product produced by the method; and
   0.1-5 % (w/w) of a binding agent.

In one embodiment, the silicon product produced by the method contains 1.0 ppm (w/w) or less boron and/or 2.0 ppm (w/w) or less phosphorus. The various embodiments of the first aspect as well as their benefits apply to the second aspect *mutatis mutandis.*

A few further embodiments of the second aspect are discussed in some detail below.

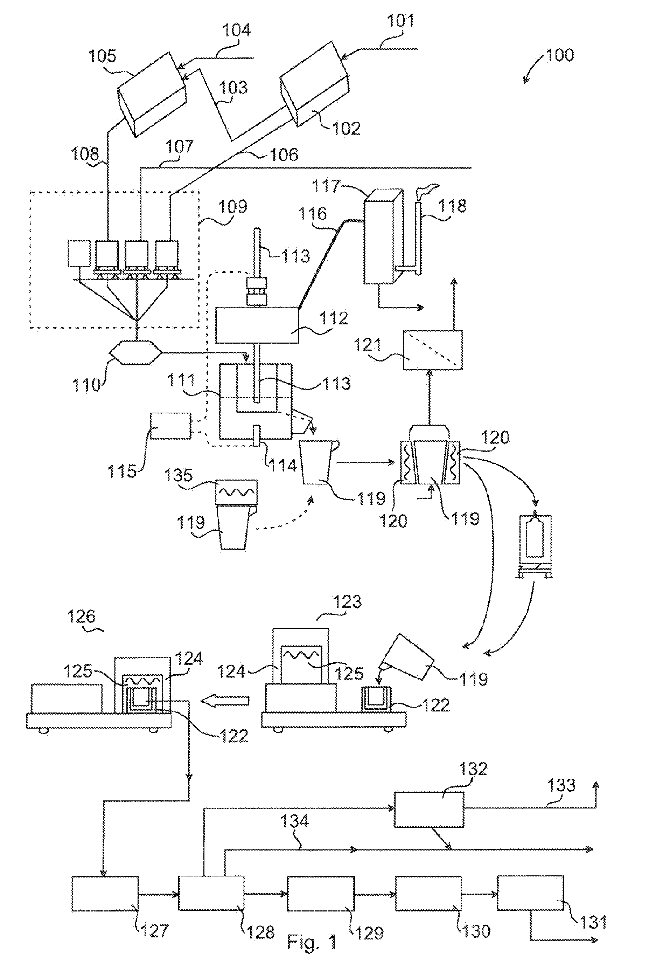

The silicon carbide product in the inner lining may for example be of the same quality as the silicon carbide product added in step a). Thus, the silicon carbide product of the inner lining may contain 1.5 ppm (w/w) or less boron and 3.0 ppm (w/w) or less phosphorus. A production of such silicon carbide is briefly explained in the example below referring to figure 1. Thus, a single production process may be used for providing silicon carbide for two different, but related, applications.

The silicon product in the inner lining may be a refined version of the silicon product produced by the method (such refinement is discussed above). Thus, the silicon product of the inner lining may contain 0.6 ppm (w/w) or less boron and 0.8 ppm (w/w) or less phosphorus. Accordingly, the method may be used in the production of one of the components of the inner lining of the reduction furnace employed in the method.

In an embodiment of the second aspect, at least part of the mixture is heated to at least 2000 °C in step b).

Also, in one embodiment the furnace may be cooled such that the 1410 °C isotherm is positioned to a pre decided position in the inner lining.

As a third aspect of the present disclosure, there is provided a use of a reduction furnace for a production of liquid silicon by carbothermic reduction, said furnace comprising an inner lining, characterized in that said inner lining comprises:
80-95 % (w/w) of a silicon carbide product containing 1.5 ppm (w/w) or less boron and 3.0 ppm (w/w) or less phosphorus;
5-20 % (w/w) of a silicon product containing 1.5 ppm (w/w) or less boron and 3.0 ppm (w/w) or less phosphorus; and
0.1-5 % (w/w) of a binding agent, such as a resin, e.g. a synthetic resin.

The various embodiments of the first and second aspects as well as their benefits apply to the third aspect *mutatis mutandis.*

### Examples

An exemplary system for production of solar grade silicon is described below with reference to figure 1.

Natural quartz 101 from a mine is added to a quartz processing plant 102, in which the natural quartz undergoes one or more of the steps of crushing, screening, milling, optical sorting, magnet separation, gravimetric separation, flotation and acidic treatment. Optical sorting comprises optical detection of impurities in the natural quartz. For example, the impurities may be visible as dark spots. Further, the optical sorting may comprise the removal of the pieces of material on which such spots have been detected by means of compressed air. That is, such pieces may be blown off a transport belt, such as a conveyor belt or the like. The acidic treatment may comprise dissolving and removing impurities. In the flotation pieces of material having different physiochemical surface properties than quartz are separated. The magnet separation comprises the removal of pieces of material containing magnetic minerals.

Some of the quartz 103 from the quartz processing plant 102 is added to a silicon carbide production plant 105, to which carbon black 104 of high purity is also added. Such carbon black may for example be derived from natural gas.

The same type of processed quartz 106 from the quartz processing plant 102 is added, together with recycled silicon metal 107 from downstream positions in the system and silicon carbide 108 from the silicon carbide production plant 105, to an arrangement for weighing and mixing 109.

The appropriately mixed material is then added to a reduction furnace111 by means of charging equipment 110. The weight ratio of quartz to silicon carbide in the material added to the reduction furnace 111 is about 1.1:1. A smoke hood 112 is arranged above the reduction furnace 111 to collect gases formed during the reduction process. The collected gases are routed, via a duct 116, to a device for flue gas filtering and dust treatment 117. The device 117 comprises a chimney 118 through which the purified gases are expelled.

A first electrode 113, preferably composed of graphite, is arranged to extend into the reduction furnace 111 from above. A second electrode 114, also preferably composed of graphite, is arranged in the bottom of the reduction furnace. The first 113 and the second 114 electrode are connected to a power source 115, such as a DC or an AC power source, for generating an electric arc that heats the carbothermic reduction process. The silicon melt formed in the reduction furnace 114 is tapped through a tapping zone of the reduction furnace 114 into a ladle 119, which has been preheated by a ladle preheating device 135. During the tapping, an inert gas, such as argon, may be bubbled through the ladle to stir the silicon melt therein. Material may be continuously added to the reduction furnace 111.

The reduction furnace 111 optionally has a split body, wherein the upper portion may rotate independently of the lower portion.

The filled ladle 119 is moved to an arrangement for chlorine refining, during which chlorine gas, optionally together with an inert gas, such as argon, is bubbled through the liquid silicon in the ladle 119 to react with impurities, such as aluminum or calcium, to form chloride salts, e.g. AlCl₃ and CaCl₂. When the chlorides subsequently get in contact with air, the corresponding oxides are formed instead. Also, chlorine gas is formed again. The gases are then purified in a gas cleaning system 121 and preferably routed to the chimney 118 of the device for flue gas filtering and dust treatment 117. The arrangement for chlorine refining preferably comprises means for heating 120, such as inductive heating, of the liquid silicon. This is to ensure that the silicon remains liquid during the process.

The refined silicon melt is then, optionally after filtering, added to a preferably preheated crucible/mould 122 on a device for directional solidification in filling position 123. The refined silicon may also be stored in an induction furnace or holding furnace for some time before being added to the preheated crucible 122. The device comprises a furnace 124 having heating elements 125. When the crucible/mould 122 has been filled, the device for directional solidification is set to its processing position 126, in which the crucible/mould 122 is placed in the furnace 124. During the processing, the crucible/mould 122 is cooled from below to generate a bottom-up solidification, which results in a concentration of impurities in the top layer of the formed solid silicon ingot.

The crucible/mould 122 is then removed from the ingot in a crucible/mould removal step 127. This normally involves breaking the crucible/mould 122 to release the ingot. The ingot is then cut to remove the outermost layer of its sides and bottom as well as the impurities-containing top layer in an ingot cutting step 128. The ingot may then be subjected to the steps of etching and washing 129, packing 130 and storage 131, before it is transported to a customer, which may recrystallize the ingot and then cut it to wafers for the production of solar cell panels.

All or some of the side and bottom layers removed in the ingot cutting step 128 are recycled to the process, preferably to the arrangement for weighing and mixing 109, after a step of milling, sandblasting and/or crushing 132. The top layer from the ingot cutting step 128 is wasted to prevent accumulation of impurities in the system 100. The milling, sandblasting and/or crushing step 132 also produces some waste.

An exemplary embodiment of a reduction furnace for carrying out a carbothermic reduction of quartz is described below with reference to figure 2.

The reduction furnace 200 has an open top, through which starting materials (prepared quartz, silicon carbide and optionally, recycled silicon metal) are added. The reduction furnace 200 comprises a second/middle lining 201, preferably composed of the same type of prepared quartz as is added as a starting material. The reduction furnace 200 further comprises an inner lining 202 composed of a mixture of high-purity silicon carbide (the same as is added as a starting material), high-purity silicon (the same as is produced by the system of figure 1) and a high-purity synthetic resin. In the bottom of the reduction furnace 200, a block 203 of graphite or carbon ramming paste is arranged between the middle lining 201 and the inner lining 202. The reduction furnace 200 is held together by a casing 204, which may be composed of steel. Optionally the furnace may be constructed as a split body with an upper ring rotating independently from the lower part. The casing 204 is normally arranged outside of the middle lining 201. Further, an insulating layer 207, such as an insulating fabric, may be arranged between the casing 204 and the middle lining 201. Such an insulating layer 207 is normally thin. Preferably, it has a thickness of less than 10 mm, such as about 5 mm. If the insulating layer 207 is too thick, the heat transport through the bottom and/or sides of the reduction furnace becomes too low for an efficient cooling of the middle lining. One purpose of arranging the insulating layer 207 between the middle lining 201 and the casing 204 is to facilitate movements of the linings 201, 202 relative the casing. Such movements are normally caused by expansions or contractions of the lining materials during temperature changes.

A first electrode 205, preferably composed of high purity graphite, extends into the reduction furnace 200 interior from above. Further, a second electrode 206 extends through the casing 204 and the middle lining 201 and into the block 203 from below. The electrodes 205, 206 are connectable to a power source (not shown).

Further, an electric coil 208 may be provided around the furnace body for rotating electric arcs generated by the electrodes inside the furnace.

The reduction furnace 200 further comprises a tapping zone (not shown) at its bottom. The tapping zone comprises a channel/runner through which the silicon formed in the reduction furnace 200 may flow out of the reduction furnace 200. The inside of the tapping zone, including the channel, is composed of the inner lining 202. The inner lining 202 is thus the only material to contact the silicon formed.

The reduction furnace 200 may have an upper portion which may rotate around the first electrode independently of the lower portion.

An exemplary industrial setting of the reduction furnace of figure 2 is described with reference to figure 3.

In the setting 300, the reduction furnace 301, having a tapping arrangement/tapping zone 302, is arranged such that liquid silicon at the bottom of the reduction furnace 301 may pour through a channel of the tapping zone 302 into a ladle 303 placed next to the reduction furnace 301. An operator may use tapping equipment 304 to control the tapping process.

The first electrode 305 is attached to the roof, optionally in the building construction, above the reduction furnace 301 such that it may be moved between an upper and a lower position. The second electrode 306 is arranged as in figure 2. A smoke hood 307 for collecting gases formed in the process is also attached to the roof and arranged above the reduction furnace 301.

The reduction furnace 301 may be split into an upper portion and a lower portion including the bottom of the furnace 301, and the upper portion may be rotatably attached to the lower portion.

## Claims

1. A reduction furnace body for production of liquid silicon by carbothermic reduction, said body comprising an inner lining, **characterized in that** inner said lining comprises:
80-95 % (w/w) of a silicon carbide product containing 1.5 ppm (w/w) or less boron and 3.0 ppm (w/w) or less phosphorus;
5-20 % (w/w) of a silicon product containing 1.5 ppm (w/w) or less boron and 3.0 ppm (w/w) or less phosphorus; and
0.1-5 % (w/w) of a binding agent, such as a resin, e.g. a synthetic resin.

2. A reduction furnace body according to claim 1, wherein the silicon carbide product and the silicon product each contain 300 ppm (w/w) Al or less.

3. A reduction furnace body according to claim 1 or 2, wherein the sum of all metals in the silicon carbide product and the silicon product, respectively, is less than 500 ppm.

4. A reduction furnace body according to any one of claims 1-3 comprising a second lining composed of a material which is different from the inner lining material, said second lining being arranged to contact the outer surface of the inner lining.

5. A reduction furnace body according to claim 4, wherein the material of the second lining is silica stone or silica ramming paste.

6. A reduction furnace body according to claim 4 or 5, wherein a layer of graphite or carbon ramming paste is arranged in between the inner and the second lining in the bottom of the body.

7. A reduction furnace body according to any one of claims 4-6 further comprising a casing arranged outside the second lining.

8. A reduction furnace body according to claim 7, wherein an insulating layer is arranged in between the casing and second lining.

9. A reduction furnace body according to any one of the preceding claims, wherein at least one electrode, preferably composed of graphite, extends into the bottom of the body from below the body.

10. A reduction furnace body according to any one of the preceding claims, wherein an electrode, preferably composed of graphite, extends into the interior of the body from above the body.

11. A reduction furnace body according to any one of the preceding claims, wherein the binding agent is a resin selected from synthetic phenol-formaldehyde resins.

12. A reduction furnace body according to any one of the preceding claims, wherein a closable channel between the interior and the exterior of the body for tapping of liquid silicon is provided at the bottom of the body and wherein the inner walls of the channel are composed of said inner lining.

13. A reduction furnace body according to any one of the preceding claims, wherein one or more electric coils are arranged around the interior of the furnace body such that a magnetic field may be created in the interior of the furnace body.

14. A reduction furnace body according to any one of the preceding claims which is split into an upper and a lower portion, wherein the upper portion is rotatably attached to the lower portion.

15. A method for production of a silicon product containing 1.5 ppm (w/w) or less boron and 3.0 ppm (w/w) or less phosphorus by carbothermic reduction, comprising the steps of:
a) adding a quartz product containing 0.50 ppm (w/w) or less boron and 1.0 ppm (w/w) or less phosphorus and a silicon carbide product containing 1.5 ppm (w/w) or less boron and 3.0 ppm (w/w) or less phosphorus; to a reduction furnace having an inner lining; and
b) heating the mixture such that a melt of the silicon product is formed, wherein said lining comprises:
80-95 % (w/w) of a silicon carbide product having the same purity as the silicon carbide product added in step a);
5-20 % (w/w) of a silicon product having at least the purity of the silicon product produced by the method; and
0.1-5 % (w/w) of a binding agent, such as a resin.
